Europäisches Patentamt

European Patent Office

Office européen des brevets

(11) Veröffentlichungsnummer: **0 099 480**
**B1**

(19)

(12) **EUROPÄISCHE PATENTSCHRIFT**

(45) Veröffentlichungstag der Patentschrift:
**18.01.89**

(21) Anmeldenummer: **83106083.5**

(22) Anmeldetag: **22.06.83**

(51) Int. Cl.⁴: **C 03 C 17/23,** C 03 C 17/00

(54) Verfahren und Vergütungsraum zum Beschichten von Behälterglas mit Titanoxid.

(30) Priorität: **17.07.82 DE 3226900**

(43) Veröffentlichungstag der Anmeldung:
**01.02.84 Patentblatt 84/5**

(45) Bekanntmachung des Hinweises auf die Patenterteilung:
**18.01.89 Patentblatt 89/3**

(84) Benannte Vertragsstaaten:
**AT BE CH FR GB IT LI NL SE**

(56) Entgegenhaltungen:
**DE-A- 2 413 668**
**FR-A- 1 519 421**
**FR-A- 2 462 399**
**US-A- 3 623 854**

(73) Patentinhaber: **RUHRGLAS Aktiengesellschaft,
Ruhrglasstrasse 50, D-4300 Essen 12 (DE)**

(72) Erfinder: **Zürbig, Jürgen, Dipl.-Chem.,
Zweigertstrasse 26, D-4300 Essen 1 (DE)**

(74) Vertreter: **Spalthoff, Adolf, Dipl.-Ing.,
Pelmanstrasse 31 Postfach 34 02 20,
D-4300 Essen 1 (DE)**

## Beschreibung

Die Erfindung betrifft ein Verfahren zum Beschichten von Glasbehältern in einem von einem Förderorgan durchlaufenen tunnelartigen Gehäuse mit Titanoxid als Vergütungsmittel, welches aus einer Titan-Chlor-Verbindung in einer chemischen Reaktion auf die heissen Oberflächen der Glasbehälter aufgebracht wird, wobei trockene Luft als Trägergas in einem die Titan-Chlor-Verbindung enthaltenen unter Druck stehenden geschlossenen Behälter mit deren Dampf beladen wird und die Temperatur des Gasgemisches unterhalb von 50 Grad C liegt.

Frisch geschmolzenes und verformtes Glas ist bekanntlich ausserordentlich empfindlich gegen eine Oberflächenbeschädigung durch Zerkratzen, welches eine geminderte Festigkeit zur Folge hat. Zur Vermeidung dieser negativen Wirkung ist es üblich, die Glasbehälter aussen mit Schutzschichten zu überziehen. Dazu werden im heissen Zustand der frisch gefertigten Glasbehälter oberhalb etwa 400 Grad C Verbindung von Metalloxiden aufgetragen. Üblich sind hierbei die Verwendung von Zinn und Titanoxid wegen deren besonderer Affinität zum molekularen Glasaufbau.

Die Beschichtung mit Titanoxid erfolgt in der Weise, dass die Ausgangsverbindungen des Titans, vorwiegend mit Chlor, in tunnelartigen Räume geleitet werden. Die heissen Glasbehälter passieren diesen Raum und treffen dort auf die Reaktionsgase. An den heissen Glasoberflächen wird durch Kontakt eine Umwandlung der Titanausgangsverbindung in Titanoxid eingeleitet, welches sich auf den Oberflächen niederschlägt (Vergütungsvorgang).

Es sind eine Reihe von Verfahren und Vorrichtungen zum Heranbringen und Aufdampfen der Reaktionsgase für den chemischen Prozesslauf bekannt, die bereits gute Ergebnisse in der Erzielung des gewünschten Effektes bringen. Ihnen allen sind aber gewisse Vor- und Nachteile zu eigen, die den anwendungstechnischen Prozess unter Produktionsbedingungen erschweren. Solche Erschwerungen sind beispielsweise bedingt durch Kondensationserscheinungen der Reaktionsgase oder zu frühzeitige Umwandlungen, die in den Zuführungsrohren und Apparaten zu Verstopfungen führen. Ein anderes Problem entsteht durch eine Begrenzung des Wirkungsgrades der Beschichtung, d.h. von dem Verhältnis zugeführter zur tatsächlich auf die Oberfläche aufgebrachter Vergütungsmasse. Eine weitere Schwierigkeit besteht bei den bekannten Verfahren darin, dass die Mündungen der Glasbehälter mit Vergütungsmitteln bedampft werden, was bei den metallischen Verschlüssen dieser Glasbehälter zu Korrosionsproblemen und/oder zu der Gefahr des Selbstaufdrehens mangels ausreichender Reibung führt. Ferner ist als Schwierigkeit bisheriger Verfahrenstechnik, vor allen Dingen im Hochleistungsbetrieb, die Gefahr zu erwähnen, dass sich die Räume, in denen die Prozesse des Vergütens stattfinden, zustopfen durch betrieblicherseits unvermeidlich querliegende, umgefallene oder sonst irgendwie zusammengeballte Glasbehälter, deren Beseitigung von Hand vergleichswiese aufwendig ist.

Durch die DE-OS 24 13 668 ist das gattungsgemässe Verfahren zur Beschichtung von Glasgegenständen mit Titanoxid als Vergütungsmittel bekannt, bei dem Titantetrachlorid auf der heissen Glasoberfläche zu Titanoxid reagiert. Die Titan-Chlor-Verbindung befindet sich in einem geschlossenen Behälter, in den trockene Luft unter Druck eingeleitet wird, um sich als Trägergas mit dem Dampf von Titantetrachlorid zu beladen. Das Gemisch hat eine Temperatur unterhalb von 50 Grad C, wenn es in den Vergütungsraum eingeleitet wird. Der Verfahrensablauf stellt ab auf eine hohe Verdünnung des in den Vergütungsraum einzuleitenden Gemisches, also von einer geringen Konzentration. Erreicht wird das durch die nachträgliche Zugabe von trockener Luft zu dem Anfangsgemisch und einer zusätzlichen Aufheizung durch eine elektrische Heizspirale. Eine bei dieser angegebenen geringen Titankonzentration noch ausreichende Beschichtung der Glasoberfläche soll durch eine turbulente Strömung innerhalb des Vergütungsraumes erreicht werden.

Durch die FR-A-2 462 399 ist ein Verfahren zum Beschichten von Float-Glas mit Metalloxiden bekannt, wobei eine Lösung einer durch die Hitze zersetzbaren Organo-Metall-Verbindung auf die heisse Oberfläche des Glases gesprüht wird. Die Organo-Metallverbindung, z.B. Acetate, 2-Ethylhexanoate oder Acetylacetonate von Kupfer, Chrom, Mangan, Nickel, Kobalt, Eisen, Zinn, Titan oder Vanadium wird in einem organischen Lösemittel aufgelöst und die erhaltene Lösung sowie die zur Atomisierung dieser Lösung verwendete Luft werden auf eine Temperatur von 10–18 Grad C gekühlt und durch wärmeisolierte Leitungen zu den Sprühdüsen geführt. Die Herabsetzung der Lösungstemperatur führt dazu, dass die Metalloxidschicht eine verbesserte Alkaliwiderstandsfähigkeit aufweist.

Durch die US-A-3 623 854 ist es bekannt, dass die Titan-Chlor-Verbindung in Form von Dampf in einen Vergütungsraum eingeleitet und in einer chemischen Reaktion auf die heissen Oberflächen der Glasbehälter aufgebracht wird. Von diesem Stand der Technik ausgehend liegt der Erfindung die Aufgabe zugrunde, das gattungsgemässe Verfahren dahingehend zu verbessern, dass in einfacher Weise sowohl eine gleichmässige und regelbare Schichtdicke erreichbar ist, als auch eine Steigerung der Abscheidensausbeute.

Erfindungsgemäss wird dies dadurch erreicht, dass in dem tunnelartigen Gehäuse Unterdruck besteht, die Behandlung der trockenen Luft mit dem Titan-Chlor-Dampf bei einer Konzentration möglichst nahe der Sättigungsgrenze erfolgt, die Temperatur des Gasgemisches auf der des umgebenden Raumes oder darunter gehalten wird und das Gasgemisch die das tunnelartige Gehäuse durchlaufenden heissen Glasbehälter mit einer laminaren Strömung allseitig umspült. Auf diese Weise wird nicht nur eine gleichmässige und regelbare Schichtdicke des aufzubringenden Vergütungsmittels erreicht, sondern es werden auch Kondensationserscheinungen des Reaktionsgases vermieden und damit Verstopfungen in den Zuführungsleitungen zum Vergütungsraum sowie in den zugehörigen Apparaturen. Da in dem tunnelartigen Gehäuse Unterdruck herrscht, werden Überschuss- und Reaktionsprodukte abgeführt, wodurch die Einhaltung einer laminaren Strömung gewährleistet ist, die zu der gewünschten regelbaren Schichtdicke führt.

Die Einleitung des Gasgemisches in den Vergütungsraum erfolgt in an sich bekannter Weise mittels Düsen. Dieser ist an seinen beiden Längsseiten mit den Düsen ausgerüstet, die derart ausgebildet und angeordnet sind, dass das aus diesen austretende Gasgemisch die den Vergütungsraum durchlaufenden Glasbehälter allseitig umspült. Deren Grösse richtet sich nach der für den jeweiligen Artikel gewünschten Mengenangebote. Ihre Anordnung ist derart, dass mit einer weitgehend laminaren Strömung, also praktisch ohne jede Verwirbelung der Gasgemischströmung, die Reaktionsgase die den Vergütungsraum durchlaufenden heissen Glasbehälter allseitig umspülen.

Vorteilhaft steht der obere Bereich des tunnelartigen Gehäuses ebenfalls unter Unterdruck. Da in diesen Bereich die Mündungen der zu beschichtenden Glasbehälter hineinragen, können die Reaktionsgase wegen des dort herrschenden Unterdruck nicht auf die Mündungen der Glasbehälter gelangen und auch nicht in diese eintreten. Ein Bedampfen der Mündungen der Glasbehälter ist damit ausgeschlossen.

Vorzugsweise findet als Titan-Chlor-Verbindung Titanchlorid Verwendung.

Der Aufdampfvorgang läuft so ab, dass die Möglichkeit besteht, nicht nur auf die noch heisse Glasoberfläche das Vergütungsmittel aufzutragen, sondern auch bei niedrigeren Temperaturen, beispielsweise etwa oberhalb von 300 Grad C, zu vergüten, weil damit die Möglichkeit geschaffen wird, durch späteres Aufheizen bereits kalter Glasbehälter auch eine Nachvergütung vornehmen zu können.

**Patentansprüche**

1. Verfahren zum Beschichten von Glasbehältern in einem von einem Förderorgan durchlaufenen tunnelartigen Gehäuse mit Titanoxid als Vergütungsmittel, welches aus einer Titan-Chlor-Verbindung in einer chemischen Reaktion auf die heissen Oberflächen der Glasbehälter aufgebracht wird, wobei trockene Luft als Trägergas in einem die Titan-Chlor-Verbindung enthaltenen unter Druck stehenden geschlossenen Behälter mit deren Dampf beladen wird und die Temperatur des Gasgemisches unterhalb von 50 Grad C liegt, dadurch gekennzeichnet, dass in dem tunnelartigen Gehäuse Unterdruck besteht, die Beladung der trockenen Luft mit dem Titan-Chlor-Dampf bei einer Konzentration möglichst nahe der Sättigungsgrenze erfolgt, die Temperatur des Gasgemisches auf der des umgebenden Raumes oder darunter gehalten wird und das Gasgemisch die das tunnelartige Gehäuse durchlaufenden heissen Glasbehälter mit einer laminaren Strömung allseitig umspült.

2. Verfahren nach Anspruch 1, dadurch gekennzeichnet, dass der obere Bereich des tunnelartigen Gehäuses ebenfalls unter Unterdruck steht.

3. Verfahren nach Anspruch 1 oder 2, dadurch gekennzeichnet, dass als Titan-Chlor-Verbindung Titanchlorid Verwendung findet.

**Claims**

1. Process for coating glass containers in a tunnel-type housing traversed by a conveying unit with titanium oxide as the treatment medium, which is applied to the hot surfaces of the glass containers from a titanium-chlorine compound in a chemical reaction, whereby dry air is charged as a carrier gas with the vapour of the titanium-chlorine compound in a pressurised closed container containing this compound and the temperature of the gas mixture is below 50°C, characterised in that there is a depression in the tunnel-type housing, the charging of the dry air with the titanium-chlorine vapour is effected with a concentration which is as near as posible to the saturation limit, the temperature of the gas mixture is held at the temperature of the surrounding space or below it and the gas mixture flows around the hot glass containers passing through the tunnel-type housing with a laminar flow on all sides.

2. Process according to claim 1, characterised in that the upper area of the tunnel-type housing is also under a depression.

3. Process according to claim 1 or 2, characterised in that titanium chloride is used as a titanium-chlorine compound.

**Revendications**

1. Procédé de revêtement de récipients en verre, dans une enceinte en forme de tunnel, traversée par un organe de transport, avec de l'oxyde de titane comme agent de traitement, lequel est formé à partir d'un composé du chlore et du titane dans une réaction chimique et déposé sur les surfaces très chaudes des récipients en verre, procédé dans lequel de l'air sec utilisé comme gaz porteur se charge de vapeur du composé de chlore et de titane dans un réservoir fermé se trouvant sous pression et contenant ce composé, la température du mélange gazeux étant inférieure à 50°C, procédé caractérisé en ce que dans l'enceinte en forme de tunnel règne une dépression, l'air sec se charge de vapeur du composé de titane et de chlore à une concentration la plus proche possible de la limite de saturation, la température du mélange gazeux est maintenue égale ou inférieure à celle de l'espace ambiant, et le mélange gazeux balaie de tous côtés, en écoulement laminaire, les récipients en verre très chauds qui traversent l'enceinte en forme de tunnel.

2. Procédé conforme à la revendication 1, caractérisé en ce que dans la région supérieure de l'enceinte en forme de tunnel règne également une dépression.

3. Procédé conforme à la revendication 1 ou 2, caractérisé en ce que l'on utilise du chlorure de titane comme composé du chlore et du titane.